# EUROPÄISCHE PATENTSCHRIFT

(11) **EP 1 026 507 B1**
(45) Veröffentlichungstag und Bekanntmachung des Hinweises auf die Patenterteilung: **23.05.2007**
(21) Anmeldenummer: 00100003.3
(22) Anmeldetag: 03.01.2000
(51) Int. Cl.: G01P 3/487, G01P 3/44, G01P 1/02

(54) **Elektromotor mit einer Anordnung zur Drehzahlüberwachung**
Electric motor with rpm-monitor
Moteur électrique avec une unité de surveillance de la vitesse de rotation

(30) Priorität: 05.02.1999 DE 29901967 U
(43) Veröffentlichungstag der Anmeldung: 09.08.2000
(73) Patentinhaber: ebm-papst Mulfingen GmbH & Co.KG, 74673 Mulfingen (DE)
(72) Erfinder: Streng, Gunter, Dipl.-Ing. (FH), 74575 Schrozberg (DE)
(74) Vertreter: Patentanwälte Dr. Solf & Zapf

(56) Entgegenhaltungen:
- WO-A-88/07285
- DE-A- 3 433 060
- DE-A- 4 028 551
- DE-A- 4 039 571
- US-A- 4 564 776

## Beschreibung

Die Erfindung betrifft einen Elektromotor mit einer Anordnung zur Drehzahlüberwachung, insbesondere zum Antrieb von Pumpen und Gebläsen, mit einem Stator und mit einem Rotor sowie mit einer Tragachse für den Stator und den Rotor, wobei der Elektromotor an mindestens einem axialen Ende durch ein Lagerschild verschlossen ist, und wobei die Anordnung zur Drehzahlüberwachung ein am Lagerschild angeordnetes Geberelement und einen durch das Geberelement schaltbaren Sensor umfaßt.

Anordnungen zur Drehzahlüberwachung sind in vielen verschieden Ausführungen bekannt. So bestehen Drehzahlgeber in der Regel entweder aus einem Sensor mit zugeordnetem Permanentmagneten oder aus einer Spule, in der von einem Magneten eine drehzahlproportionale analoge oder impulsartige Spannung induziert wird.

Aus der DE-OS 34 33 060 ist ein Drehzahlsensor für einen Elektromotor bekannt, der ein mit Permanentmagneten versehenes Polrad aufweist, das auf ein aus dem Motorgehäuse herausragendes Läuferwellenende aufgesetzt ist. Da diese Anordnung auf den Motor außen aufgesetzt wird, verlängert sie den gesamten Aufbau und kann deshalb für viele kompakt zu bauende Anwendungsfälle nicht verwendet werden.

Auch aus dem DE-GM 295 14 026 ist eine Vorrichtung zur Drehzahl- und/oder Drehrichtungserfassung von Motoren, insbesondere Asynchronmotoren bekannt, bei der der Impulsgeber außenseitig einer am Motor angebrachten Lüfterhaube befestigt ist und mit Geberfahnen zusammenwirkt. Die Impulsgeber sind hier am Umfangsrand des Motors angebracht und vergrößern dadurch ungünstigerweise die radialen Einbaumaße.

Des weiteren ist aus dem DE-GM 94 19 788 eine Gebläse- oder Pumpen-Drehzahlregelung bekannt, bei der an einem Gebläse- oder Pumpenrad mindestens ein Magnet angebracht ist, dem ein Hall-Sensor in axialem Abstand auf einer Schaltplatine zugeordnet ist. Der Hall-Sensor liefert ein Ausgangssignal, dessen Frequenz der Drehzahl des Gebläse- oder Pumpenrades entspricht. Da die Magnete am Flügelrad befestigt sind, müssen zur Vermeidung von Unwuchten des Rades die Magnete entweder immer paarweise angebracht oder durch entsprechende Ausgleichsgewichte ergänzt werden. Eine solche Drehzahlregelung ist aufwendig und kostenintensiv.

Die DE-OS 36 36 039 zeigt einen Rotormagneten in Ringform zur berührungslosen Abnahme der Drehzahl an Maschinen wie z.B. Getrieben, Generatoren, Motoren usw. Der Rotormagnet weist eine Federzunge auf, die zum Halten an einem Wellenumfang mit einer Sperrnase versehen ist. Hierbei ist es problematisch, daß die Federzunge des verhältnismäßig spröden Magnetmaterials abbrechen kann und somit eine Befestigung des Magneten dauerhaft nicht gewährleistet ist.

Aus dem DE-GM 296 09 178 ist ebenfalls ein Magnetpolrotor für eine Drehzahlmessung bekannt, bei der eine Verbesserung der Temperaturbeständigkeit von Magnetpolrädern, wie sie aus der vorstehend genannten DE-OS 36 36 039 bekannt sind, erreicht werden soll. Hierzu sind die Magnetpole in einem schwer entflammbaren Kunststoffring eingebettet. Der Kunststoffring ist auf eine Zylinderfläche eines mit der Welle verbundenen Basisringes aufgepreßt. Ein sogenannter Käfigring hält den Kunststoffring fest, so daß dieser mit dem Basisring immer drehfest verbunden ist.

Ein Elektromotor ähnlich dem der eingangs beschriebenen Art ist in der DE-OS 32 41 152 beschrieben. Diese Publikation offenbart eine Anordnung zur Drehzahlüberwachung für Ventilatoren, bei der die Drehzahl mittels eines der Drehzahl proportionalen Signals überwacht wird. Die Drehzahlüberwachungseinrichtung besteht hierbei aus einem an einer Stirnfläche des Rotors befestigten Permanentmagneten (Geberelement), dem ein am Stator angeordneter Sensor gegenübersteht. Der Sensor ist auf einem Kreis angeordnet, dessen Mittelpunkt in der Drehachse des Rotors liegt und dessen Radius einem Kreisbahnradius des Permanentmagneten entspricht. Insbesondere wird ferner im einzelnen ein Kompaktventilator mit einem derartigen Elektromotor beschrieben, der aus einem Gehäuse und aus einem Wandring besteht, welcher über Streben mit einem drehfesten Motorflansch verbunden ist. Der Sensor ist dabei derart in einer Strebe angeordnet, daß er in den Bereich des Motorflansches ragt, der sich gegenüberliegend dem Permanentmagneten befindet.

Ein Elektromotor der vorbeschriebenen Art - jedoch ohne Anordnung zur Drehzahlüberwachung - ist auch aus der deutschen Offenlegungsschrift DE-OS 40 39 571 bekannt, die einen kollektorlosen Außenläufermotor mit lösbar befestigten Lagerschilden als Abdeckungen für den Rotor zum Gegenstand hat. Bei diesem Motor, der eine auf beiden Seiten gelagerte Achse aufweist, ist das Motoranschlußkabel, zum Zwecke der Verbindung mit Wicklungsdrähten des Stators, von außen durch eine Bohrung in der Tragachse in das Innere des Motors in den Bereich des Stators hineingeführt. Die aus der DE-OS 32 41 152 bekannte Sensoranordnung kann einen solchen Elektromotor nicht zur Anwendung kommen, da der Rotor beidseitig durch Lagerschilde verschlossen ist und die Anschlußleitungen durch einen Hohlachsenabschnitt in den Innenraum des Motors geführt werden.

Die DE-PS 40 28 551 zeigt einen gattungsgemäßen Kleinmotor mit Drehzahlerfassungsgenerator, wobei diese Anordnung im Inneren des Motors untergebracht ist. Der Drehzahlerfassungsgenerator besteht hier aus einem feststehenden Magneten, einem auf einer Welle befestigten Rotor und einem innenverzahnten Kern. Bei Drehung des Motors ändern sich die Magnetflüsse entsprechend dem magnetischen Widerstand im Spalt zwischen Rotor und innenverzahntem Kern, wodurch eine Spannung mit einer Frequenz entsprechend der Änderung des Magnetflusses erzeugt wird. Eine solche Ausführung ist relativ teuer.

Der Erfindung liegt die Aufgabe zugrunde, einen Elektromotor der eingangs beschriebenen Art, insbesondere hinsichtlich seiner Anordnung zur Drehzahlüberwachung, derart weiterzuentwickeln, daß er bei kompakter Bauweise - sowohl seiner axialen als auch radialen Abmaße - und bei störunanfälliger Ausführung der Anordnung zur Drehzahlüberwachung mit verringertem Aufwand herstellbar ist. Insbesondere soll dabei die Anordnung zur Drehzahlüberwachung derart gestaltet sein, daß auch ein Elektromotor, wie er beispielsweise in der DE-OS 40 39 571 beschrieben ist, kostengünstig mit einer Anordnung zur Drehzahlüberwachung aus- oder nachgerüstet werden kann.

Eine Vorrichtung mit den Merkmalen des ersten Teils von Anspruch 1 ist aus WO-A-88/07285 bekannt.

Diese Aufgabe wird durch einen Elektromotor mit den Merkmalen von Anspruch 1 gelöst.

Die Erfindung gewährleistet mit Vorteil eine geschützte und insbesondere montagetechnisch einfach und damit aufwandsarm realisierbare Anordnung des Geberelementes, die gleichzeitig auch eine hohe Funktionalität der Anordnung zur Drehzahlüberwachung sichert.

Das Geberelement ist dabei als ein Permanentmagnet, und zwar als ein konzentrisch zur Tragachse angeordneter Ringmagnet mit insbesondere mehrere Polpaare aufweisender radialer oder axialer Magnetisierung, ausgeführt. Durch diese rotationssymmetrische Ausführung müssen keine Unwuchten ausgeglichen werden.

In bevorzugter Ausführung kann der Sensor, insbesondere ein Hall-Sensor, dann auf einer an einem axialen Ende des Stators befestigten Verschaltungsplatte aufgesetzt sein. So kann seine Montage - ebenso wie die des Permanentmagneten - kostengünstig in den Produktionsablauf des Motors integriert werden und ist so prozeßsicher gestaltet, daß Montagefehler vermieden werden können.

Weiterhin ist es außerordentlich vorteilhaft, dass die Steck-Befestigung des Permanentmagneten an der Innenwand der Abdeckung und optional auch die des vorzugsweise gemeinsam mit einer entsprechenden Auswerteelektronik auf einer Leiterplatte installierten Sensors auf der Verschaltungsplatte über Rastverbindungen erfolgt.

Weitere vorteilhafte Ausführungen der Erfindung sind in den Unteransprüchen und der nachfolgenden Beschreibung enthalten. Anhand eines in den beiliegenden Zeichnungsfiguren dargestellten Ausführungsbeispiels wird die Erfindung näher erläutert. Es zeigen:
- Fig. 1: eine perspektivische Explosionsdarstellung der wesentlichen Einzelteile eines erfindungsgemäßen Elektromotors mit einer Anordnung zur Drehzahlüberwachung,
- Fig. 2: eine perspektivische Darstellung eine Abdeckung für den Rotor eines erfindungsgemäßen Elektromotors und eines daran befestigten Permanentmagneten,
- Fig. 3: in einer etwa Fig. 2 entsprechenden, jedoch vergrößerten Ansicht eine perspektivische Darstellung des in einem Halterungsteil befestigten Permanentmagneten eines erfindungsgemäßen Elektromotors,
- Fig. 4: aus anderer Blickrichtung als in Fig. 2, eine perspektivische Explosionsdarstellung der Abdeckung für den Rotor eines erfindungsgemäßen Elektromotors und des Halterungsteiles für den Permanentmagneten,
- Fig. 5 und 6: aus verschiedenen Blickrichtungen (Draufsicht und Unteransicht), zwei perspektivische Ansichten des Halterungsteiles für den Permanentmagneten eines erfindungsgemäßen Elektromotors,
- Fig. 7: eine perspektivische Darstellung eines Stators eines erfindungsgemäßen Elektromotors, aus anderer Blickrichtung als in Fig. 1,
- Fig. 8: eine perspektivische Darstellung eines auf einer Leiterplatte installierten Sensors eines erfindungsgemäßen Elektromotors,
- Fig. 9: vergrößert gegenüber Fig. 7 und aus anderer Blickrichtung, eine perspektivische Darstellung eines Details des Stators eines erfindungsgemäßen Elektromotors,
- Fig. 10: einen axialen Teilschnitt eines erfindungsgemäßen Elektromotors.

In den verschiedenen Figuren der Zeichnung sind dieselben Teile auch stets mit denselben Bezugszeichen versehen, so daß sie in der Regel auch jeweils nur einmal beschrieben werden.

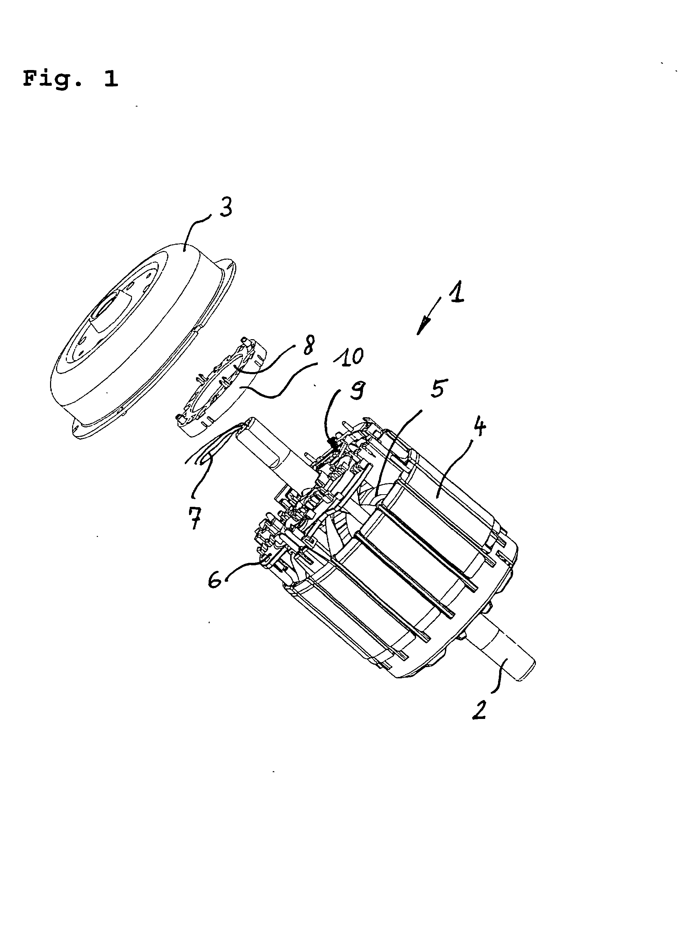

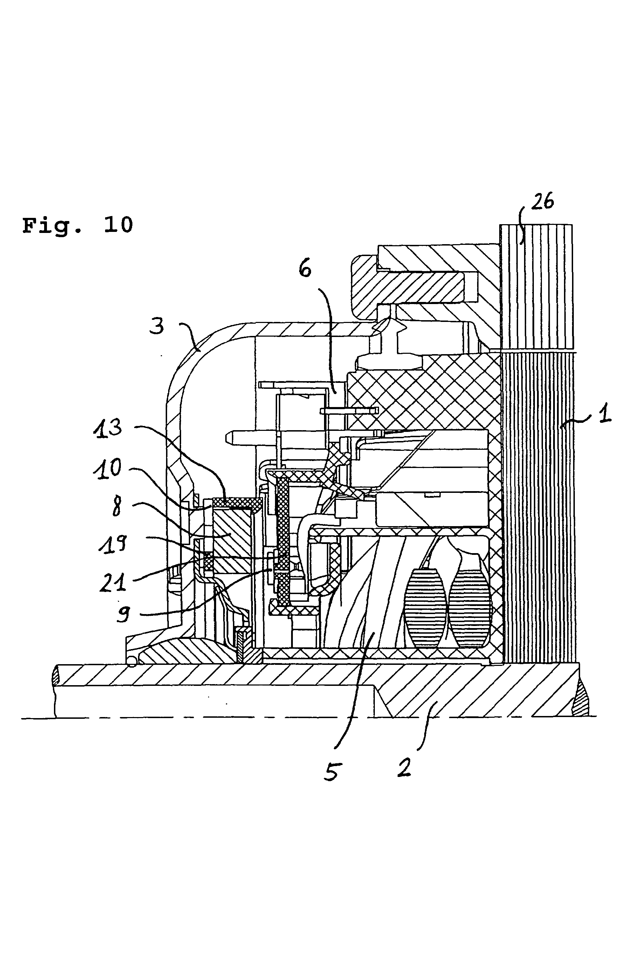

Wie Fig. 1 zeigt, weist ein erfindungsgemäßer Elektromotor, der insbesondere zum Antrieb von Pumpen und Gebläsen bestimmt ist, einem Stator 1 und eine mit dem Stator 1 verbundene Tragachse 2 auf. Auf der Tragachse 2 ist ein den Stator 1 umgebender (nur in Fig. 10 dargestellter und dort mit dem Bezugszeichen 26 versehener) Rotor drehbar gelagert.

Es handelt sich somit um einen Außenläufermotor. Der Rotor 26 ist an mindestens einem axialen Ende durch eine mitrotierende Abdeckung (Lagerschild 3) in an sich bekannter Weise verschließbar. Die Abdeckung kann dabei vorzugsweise auf beiden Seiten des Rotors 26 vorgesehen sein.

Der Stator 1 des Außenläufermotors besteht aus einem Statorblechpaket 4, einer Statorwicklung 5, einer Verschaltungsplatte 6 zum Verschalten der Statorwicklung 5 mit einem Motoranschlußkabel bzw. mit Anschlußlitzen 7. Die Verschaltungsplatte 6 ist auf der Stirnseite des Statorblechpaketes 4 im Bereich über den Wickelköpfen des Stators 1 befestigt. Die Tragachse 2 ist mindestens von einem Achsende ausgehend als Hohlachse zur Aufnahme des Motoranschlußkabels bzw. der Anschlußleitungen 7 ausgeführt.

Der erfindungsgemäße Elektromotor weist eine Anordnung zur Drehzahlüberwachung auf, die als Geberelement einen Permanentmagneten 8 und einen durch das Magnetfeld des Permanentmagneten 8 schaltbaren, am Stator 1 angeordneten Sensor 9 umfaßt. Für den Permanentmagneten 8 ist ein spezielles, vorzugsweise aus Kunststoff bestehendes Halterungsteil 10 vorgesehen.

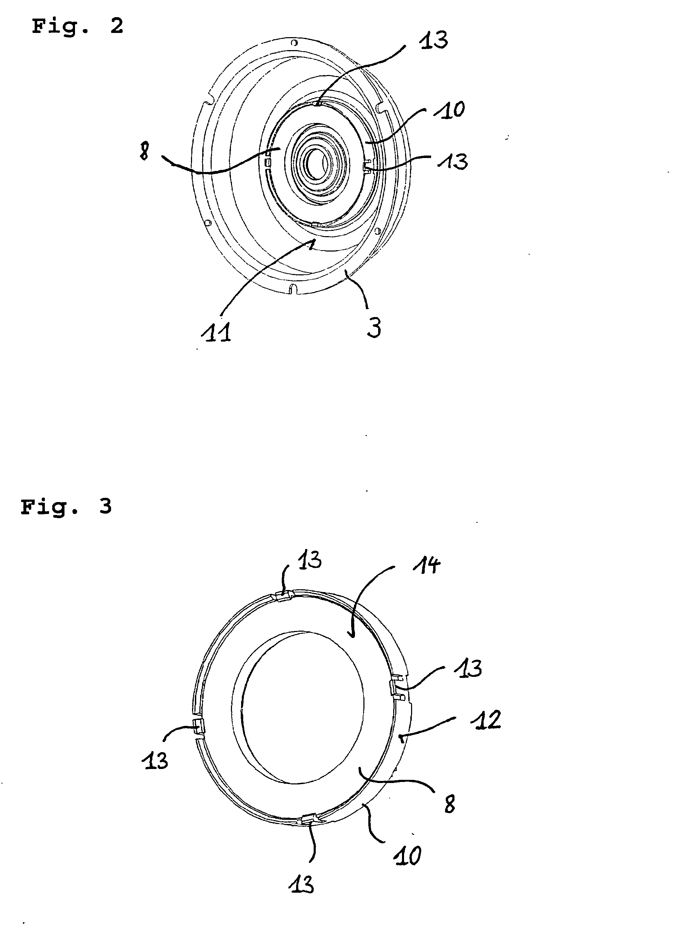

Wie in Fig. 2 dargestellt, ist der Permanentmagnet 8 steckbar an einer Innenwand 11 des Lagerschildes 3 angeordnet. Er ist als ein konzentrisch zur Tragachse 2 angeordneter Ringmagnet ausgeführt. Eine solche Anordnung ist nicht nur wenig raumgreifend, sondern auch leicht montierbar. Der Permanentmagnet 8 befindet sich zudem an einer besonders geschützen, durch das ihn umgreifende Lagerschild 3 beschädigungsgesicherten Stelle.

Wie Fig. 3 veranschaulicht, ist das Halterungsteil 10 (wie auch der Permanentmagnet 8) in der dargestellten Ausführung der Erfindung ringförmig ausgebildet. Zur Befestigung des Ringmagneten ist daran ein umfangsgemäß verlaufender Haltesteg 12 vorgesehen, an dem sich federnd angespritzte Rasthaken 13 befinden, die den Permanentmagneten 8 im in das Halterungsteil 10 eingesetzten Zustand an seiner oberen Stirnseite 14 übergreifen und festhalten. Der Permanentmagnet 8 kann so einfach in das Halterungsteil 10 eingeklipst werden.

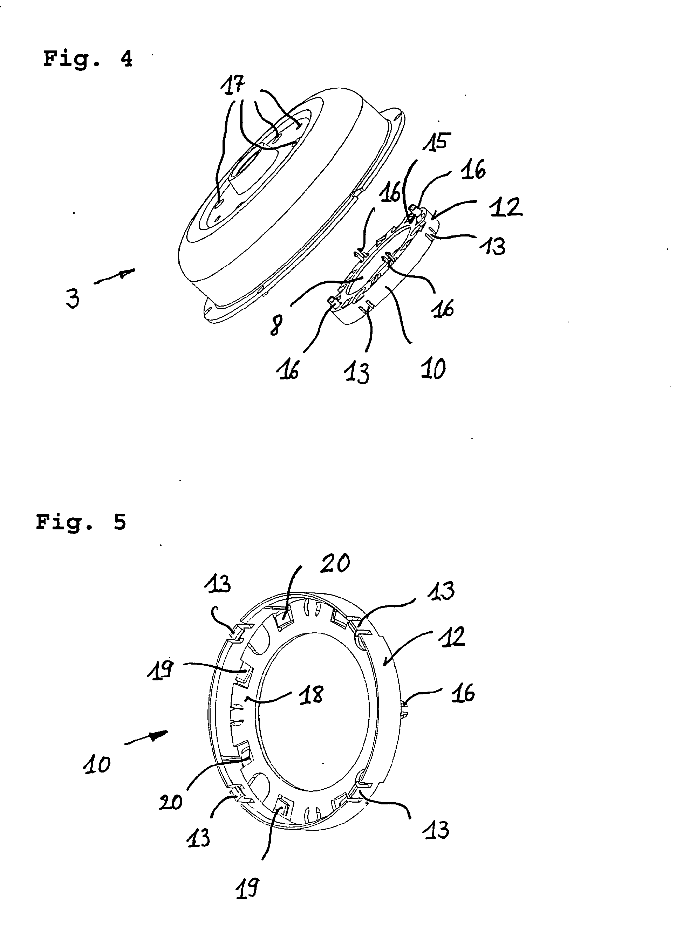

Aus Fig. 4 geht hervor, wie in montagetechnisch einfacher Weise die Befestigung des Halterungsteiles 10 am Lagerschild 3 erfolgen kann: An einer Unterseite 15 des Halterungsteiles 10 können angespritzte federartig wirkende Befestigungszapfen 16 vorgesehen sein, die in entsprechend angeordnete Bohrungen 17 im Lagerschild 3 formschlüssig eingreifen und als Rastelemente wirken.

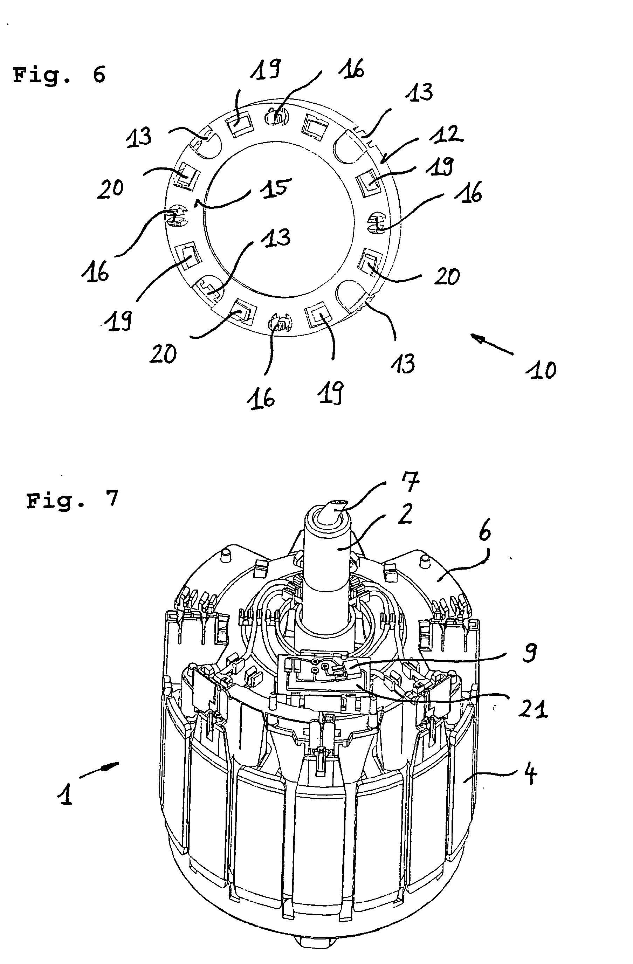

Vorteilhafterweise läßt die Befestigungsart des Permanentmagneten 8 sowohl relativ große Fertigungstoleranzen des Ringmagneten selbst als auch des Lagerschildes 3 des Rotors 26 zu. Einzelheiten des Halterungsteiles 10 sind dazu den Fig. 5 und 6 zu entnehmen. Das Halterungsteil 10 weist zur Auflage des Ringmagneten eine Bodenfläche 18 und den bereits genannten, den Ringmagneten außen umgreifenden Haltesteg 12 auf. Zum Ausgleich von Toleranzen des Ringmagneten sind an der Bodenfläche 18 des Halterungsteiles 10 nach innen (in Richtung des Ringmagneten) weisende Federzungen 19 vorhanden, die den Ringmagneten in Richtung der Rasthaken 13 am Haltesteg 12 drücken, so daß der Ringmagnet zwischen den Federzungen 19 und den Rasthaken 13 gehalten werden kann.

Um Unebenheiten an der Innenwand 11 des Lagerschildes 3 auszugleichen, sind des weiteren an der Bodenfläche 18 des Halterungsteiles 10 nach außen (in Richtung des Lagerschildes 3) weisende Federzungen 20 vorgesehen, die dem Toleranzausgleich dienen.

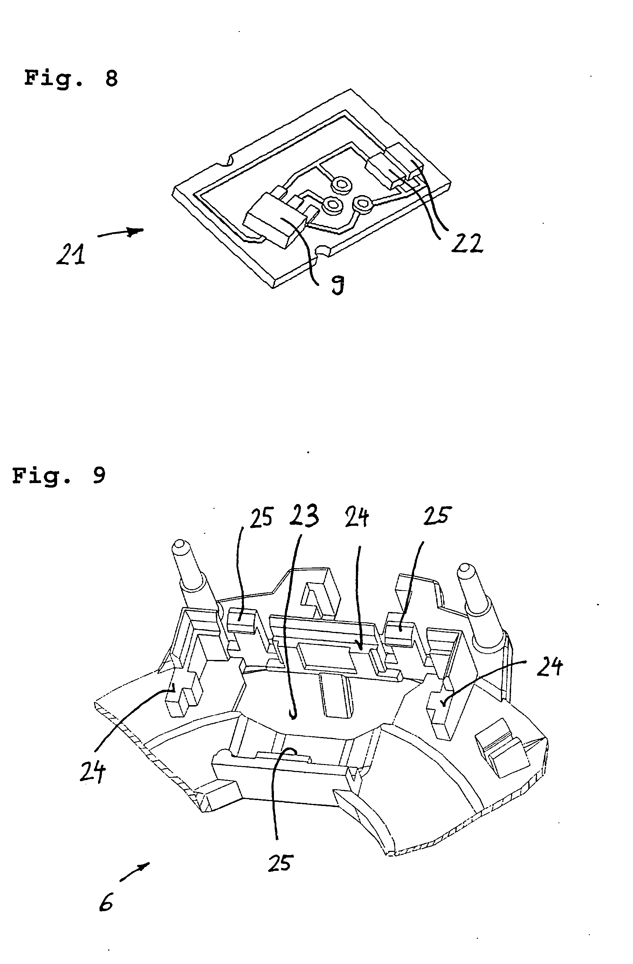

Fig. 7 bis 9 zeigen im Detail, wie mit Vorteil der durch das Magnetfeld des Permanentmagneten 8 schaltbare Sensor 9 am Stator 1 des erfindungsgemäßen Elektromotors angeordnet sein kann. Wie Fig. 7 zeigt, ist die Verschaltungsplatte 6 mit einer Leiterplatte 21 bestückt, auf der sich der Sensor 9, vorzugsweise ein Hall-Sensor, mit einer zugehörigen Auswerteelektronik 22 befindet. Die Leiterplatte ist als Einzelteil in Fig. 8 dargestellt.

Vorteilhafterweise kann die Leiterplatte 21 in eine dafür vorgesehene, entsprechend ausgestaltete Öffnung 23 der Verschaltungsplatte 6 (Fig. 9) eingeklipst werden. Die Verschaltungsplatte 6 weist randseitig der Öffnung 23 Auflageflächen 24 auf, auf denen die Leiterplatte 21 aufliegen kann. Außerdem sind am Rand der Öffnung 23 mehrere Rasthaken 25 vorgesehen, mittels derer die Leiterplatte 21 festgehalten werden kann. Auf diese Weise kann die Montage des Sensors 9 am Stator 1 kostengünstig in den Produktionsablauf des erfindungsgemäßen Motors integriert werden. Die gesamte Montage der Einheit kann dabei so prozeßsicher gestaltet werden, daß keine Montagefehler auftreten können.

Aus der in Fig. 10 gezeigten, axial im Bereich der Leiterplatte 21 geschnittenen Darstellung des erfindungsgemäßen Elektromotors wird deutlich, daß sich der Sensor 9 auf der Leiterplatte 21 und der Permanentmagnet 8 in geringem Abstand gegenüberstehen. Der Sensor ist in einem Abstand vom Mittelpunkt der Tragachse 2 angeordnet der einem mittleren Radius des Ringmagneten entspricht. Bei sich drehendem Motor wird der Sensor 9 vom Magnetfeld des Ringmagneten beeinflußt, wobei dieser eine radiale oder axiale Magnetisierung mit mehreren Polpaaren aufweist. Bei jedem Nord-Süd-Übergang ändert sich das Ausgangssignal des Sensors 9, so daß entweder ein Low-Signal oder ein High-Signal vorliegt, das zur Bestimmung der Motordrehzahl von der Auswerteelektronik 22 weiterverarbeitet werden kann. Die Signalzahl pro Umdrehung des Motors ist dabei abhängig von der Polpaarzahl des Magneten. Je höher die Polpaarzahl ist, um so genauer kann die Winkelauflösung der Stellung des Rotors 26 bestimmt werden.

Aus den vorstehenden Ausführungen geht bereits hervor, daß die vorliegende Erfindung nicht auf das dargestellte Ausführungsbeispiel beschränkt ist, sondern auch alle im Sinne der Erfindung gleichwirkenden Mittel und Maßnahmen, beispielsweise einen Innenläufermotor mit feststehendem Lagerschild 3, umfassen kann. Bei einer Ausführung des Motors als Innenläufer kann der Sensor 9 auf einer an einem axialen Ende des Rotors befestigten Verschaltungsplatte aufgesetzt sein. Auch eine induktiv wirkende Geber-/Sensor-Anordnung zur Drehzahlüberwachung fällt in den Rahmen der Erfindung. Es ist auch möglich, mittels eines Halterungsteiles eine Spule in der gleichen Art und Weise zu befestigen wie den Permanentmagneten. Weiterhin sind dem Fachmann vielfache Möglichkeiten zur weiteren Ausgestaltung der Erfindung, z.B. zur Befestigung des Geberelementes bzw. des Sensors 9 gegeben.

### Bezugszeichen

- 1: Stator
- 2: Tragachse
- 3: Lagerschild
- 4: Statorblechpaket
- 5: Statorwicklung
- 6: Verschaltungsplatte
- 7: Anschlußlitzen
- 8: (ringförmiger) Permanentmagnet (Geberelement)
- 9: Sensor (auf 21)
- 10: Halterungsteil für 8
- 11: Innenwand von 3
- 12: Haltesteg von 10
- 13: Rasthaken an 10
- 14: obere Stirnseite von 8
- 15: Unterseite von 10
- 16: Befestigungszapfen von 10 an 15
- 17: Bohrung in 3
- 18: Bodenfläche von 10
- 19: Federzungen, nach innen weisend, an 10
- 20: Federzungen, nach außen weisend, an 10
- 21: Leiterplatte
- 22: Auswerteelektronik für 9 (auf 21)
- 23: Öffnung für 21 in 6
- 24: Auflageflächen an 6 für 21
- 25: Rasthaken an 4
- 26: Rotor

## Patentansprüche

1. Elektromotor mit einer Anordnung zur Drehzahlüberwachung, insbesondere zum Antrieb von Pumpen und Gebläsen, mit einem Stator (1) und mit einem Rotor (26) sowie mit einer Tragachse (2) für den Stator (1) und den Rotor (2), wobei der Elektromotor an mindestens einem axialen Ende durch ein als mitrotierende Abdeckung ausgebildetes Lagerschild (3) verschlossen ist, und wobei die Anordnung zur Drehzahlüberwachung ein steckbar an einer Innenwand (11) des Lagerschildes (3) angeordnetes, als ringförmiger Permanentmagnet (8) ausgebildetes Geberelement und einen durch das Geberelement schaltbaren Sensor (9) umfaßt, wobei der Permanentmagnet (8) steckbar an der Abdeckung gehalten ist,
**dadurch gekennzeichnet, daß** zur steckbaren Halterung des Permanentmagneten (8) ein separates, ringförmiges den Permanentmagneten (8) aufnehmendes Halterungsteil (10) vorgesehen ist, welches eine Bodenfläche (18) zur Auflage des Permanentmagneten (8) sowie einen den Permanentmagneten (8) seitlich umgreifenden Haltesteg (12) aufweist, an dem sich federnde Rasthaken (13) befinden, die den Permanentmagneten (8) an seiner oberen Stirnseite (14) übergreifen und im Halterungsteil (10) halten, wobei das Halterungsteil (10) seinerseits steckend mit der Innenwand (11) des Lagerschildes (3) verbindbar ist.

2. Elektromotor nach Anspruch 1,
**dadurch gekennzeichnet, daß** der Permanentmagnet (8) konzentrisch zur Tragachse (2) angeordnet und mit mehrere Polpaare aufweisender radialer oder axialer Magnetisierung, ausgeführt ist.

3. Elektromotor nach Anspruch 1 oder 2,
**dadurch gekennzeichnet, daß** der Sensor (9), insbesondere ein Hall-Sensor, auf einer an einem axialen Ende des Stators (1) befestigten Verschaltungsplatte (6) aufgesetzt ist.

4. Elektromotor nach einem der Ansprüche 1 bis 3,
**gekennzeichnet durch** eine Ausbildung als AC-Außenläufermotor, wobei der Stator (1) fest mit der Tragachse (2) verbunden ist, der Rotor (26) den Stator (1) umfangsseitig umgibt und drehbar auf der Tragachse (2) gelagert ist und wobei die Tragachse (2) zur Aufnahme von Anschlußleitungen (7) mindestens von einem Achsende ausgehend als Hohlachse ausgeführt ist.

5. Elektromotor nach einem der Ansprüche 1 bis 4,
**dadurch gekennzeichnet, daß** zur steckbaren Befestigung des Geberelementes an der Innenwand (11) des Lagerschildes (3) und/oder des Sensors (9) auf der Verschaltungsplatte (6) Rastverbindungen vorgesehen sind.

6. Elektromotor nach einem der Ansprüche 1 bis 5,
**dadurch gekennzeichnet, daß** das Halterungsteil (10) an seiner Unterseite (15) federartig wirkende Befestigungszapfen (16) zum formschlüssigen Eingriff in korrespondierende Bohrungen (17) im Lagerschild (3) aufweist.

7. Elektromotor nach einem der Ansprüche 1 bis 6,
**dadurch gekennzeichnet, daß** das Halterungsteil (10) an der Bodenfläche (18) nach innen, in Richtung des Permanentmagneten (8), weisende Federzungen (19) aufweist.

8. Elektromotor nach einem der Ansprüche 1 bis 7,
**dadurch gekennzeichnet, daß** das Halterungsteil an der Bodenfläche (18) nach außen, in Richtung des Lagerschildes (3), weisende Federzungen (20) aufweist.

9. Elektromotor nach einem der Ansprüche 3 bis 8,
**dadurch gekennzeichnet, daß** der Sensor (9) mit einer zugehörigen Auswerteelektronik (22) auf einer Leiterplatte (21) angeordnet ist, die in eine Öffnung (23) der Verschaltungsplatte (6) einklipsbar ist.

10. Elektromotor nach Anspruch 9,
**dadurch gekennzeichnet, daß** die Verschaltungsplatte (6) im Bereich eines Randes der Öffnung (23) Auflageflächen (24) und Rasthaken (25) für die Leiterplatte (21) aufweist.

## Claims

1. An electric motor with an arrangement for monitoring revolutions/min., in particular for driving pumps and fans, having a stator (1) and a rotor (26) as well as a carrying axle (2) for the stator (1) and the rotor (2), wherein the electric motor is closed at at least one axial end by an end shield (3) in the form of a synchronously rotating cover, and wherein the arrangement for monitoring revolutions/min. comprises a transmitting element, arranged on an inside wall (11) of the end shield (3) in an insertable manner and designed as an annular permanent magnet (8), and a sensor (9) controllable by the transmitting element, wherein the permanent magnet (8) is held on the cover in an insertable manner, **characterised in that** a separate annular mounting part (10) receiving the permanent magnet (8) is provided for the insertable mounting of the permanent magnet (8), which mounting part (10) has a base surface (18) to support the permanent magnet (8) as well as a holding member (12) which laterally engages around the permanent magnet (8) and on which resilient locking hooks (13) are located, these hooks (13) engaging over the permanent magnet (8) at its upper face (14) and holding it in the mounting part (10), wherein the mounting part (10) is for its part connectable in an insertable manner to the inside wall (11) of the end shield (3).

2. An electric motor according to claim 1, **characterised in that** the permanent magnet (8) is arranged concentric with the carrying axle (2) and has radial or axial magnetisation with a plurality of pole pairs.

3. An electric motor according to claim 1 or 2, **characterised in that** the sensor (9), in particular a Hall sensor, is placed on a wiring plate (6) secured to an axial end of the stator (1).

4. An electric motor according to any one of claims 1 to 3, **characterised by** a design as an AC external rotor motor, wherein the stator (1) is securely connected to the carrying axle (2), the rotor (26) surrounds the stator (1) circumferentially and is rotatably mounted on the carrying axle (2) and wherein the carrying axle (2) is, starting from at least one axle end, in the form of a hollow axle in order to receive connecting lines (7).

5. An electric motor according to any one of claims 1 to 4, **characterised in that** locking connections are provided for insertable securing of the transmitting element to the inside wall (11) of the end shield (3) and/or of the sensor (9) on the wiring plate (6).

6. An electric motor according to any one of claims 1 to 5, **characterised in that** the underside (15) of the mounting part (10) has securing pegs (16) of spring-like action for engagement in a positive-locking manner in corresponding bores (17) in the end shield (3).

7. An electric motor according to any one of claims 1 to 6, **characterised in that** the base surface (18) of the mounting part (10) has flexible tongues (19) directed inwards in the direction of the permanent magnet (8).

8. An electric motor according to any one of claims 1 to 7, **characterised in that** the base surface (18) of the mounting part has flexible tongues (20) directed outwards in the direction of the end shield (3).

9. An electric motor according to any one of claims 3 to 8, **characterised in that** the sensor (9) with associated evaluation electronics (22) is arranged on a printed circuit board (21) clippable into an opening (23) in the wiring plate (6).

10. An electric motor according to claim 9, **characterised in that** in the region of one edge of the opening (23), the wiring plate (6) has contact surfaces (24) and locking hooks (25) for the printed circuit board.

## Revendications

1. Moteur électrique comprenant un dispositif pour le contrôle du régime, en particulier pour l'entraînement de pompes et de souffleries, avec un stator (1) et avec un rotor (26) ainsi qu'avec un axe porteur (2) pour le stator (1) et le rotor (2), le moteur électrique étant fermé sur au moins une extrémité axiale par une flasque (3) conçue comme un revêtement également rotatif, et le dispositif pour le contrôle du régime comprenant un élément transmetteur disposé de façon enfichable sur une paroi intérieure (11) de la flasque (3) et conçu comme aimant permanent (8) de forme annulaire, et un capteur (9) commutable par l'élément transmetteur, l'aimant permanent (8) étant maintenu de façon enfichable sur le revêtement,
**caractérisé en ce que**, pour la fixation emboîtable de l'aimant permanent (8), il est prévu une partie de fixation (10) séparée, en forme de bague et recevant l'aimant permanent (8), qui présente une surface de base (18) pour l'appui de l'aimant permanent (8) et une nervure de retenue (12) entourant latéralement l'aimant permanent (8), nervure sur laquelle se trouvent des crochets d'encliquetage (13) élastiques, qui recouvrent l'aimant permanent (8) sur son côté avant (14) supérieur et le maintiennent dans la partie de fixation (10), la partie de fixation (10) pouvant être reliée par emboîtement avec la paroi intérieure (11) de la flasque (3).

2. Moteur électrique selon la revendication 1,
**caractérisé en ce que** l'aimant permanent (8) est disposé de façon concentrique par rapport à l'axe porteur (2) et est réalisé avec une magnétisation radiale ou axiale présentant plusieurs paires de pôles.

3. Moteur électrique selon la revendication 1 ou 2,
**caractérisé en ce que** le capteur (9), en particulier un capteur de Hall, est posé sur une plaque de câblage (6) fixée sur une extrémité axiale du stator (1).

4. Moteur électrique selon l'une quelconque des revendications 1 à 3,
**caractérisé par** une réalisation comme moteur à induit extérieur AC, le stator (1) étant relié de façon fixe à l'axe porteur (2), le rotor (26) entourant le stator (1) côté pourtour et étant logé de façon rotative sur l'axe porteur (2) et l'axe porteur (2) étant réalisé sous la forme d'un axe creux pour le logement de lignes de raccordement (7) à partir d'au moins une extrémité d'axe.

5. Moteur électrique selon l'une quelconque des revendications 1 à 4,
**caractérisé en ce que** des liaisons d'encliquetage sont prévues sur la plaque de câblage (6) pour la fixation emboîtable de l'élément transmetteur sur la paroi intérieure (11) de la flasque (3) et/ou du capteur (9).

6. Moteur électrique selon l'une quelconque des revendications 1 à 5,
**caractérisé en ce que** la partie de fixation (10) présente sur son côté inférieur (15) des pivots de fixation (16) agissant à la façon d'un ressort pour l'engagement par complémentarité de formes dans des perçages (17) correspondants dans la flasque (3).

7. Moteur électrique selon l'une quelconque des revendications 1 à 6,
**caractérisé en ce que** la partie de fixation (10) présente sur la surface du sol (18) des lames flexibles (19) dirigées vers l'intérieur en direction de l'aimant permanent (8).

8. Moteur électrique selon l'une quelconque des revendications 1 à 7,
**caractérisé en ce que** la partie de fixation présente sur la surface du sol (18) des lames flexibles (20) dirigées vers l'extérieur en direction de la flasque (3).

9. Moteur électrique selon l'une quelconque des revendications 3 à 8,
**caractérisé en ce que** le capteur (9) est disposé avec une électronique d'analyse (22) spécifique sur une plaque à circuits imprimés (21), qui peut être fixée dans une ouverture (23) de la plaque de câblage (6).

10. Moteur électrique selon la revendication 9,
**caractérisé en ce que** la plaque de câblage (6) présente dans la zone d'un bord de l'ouverture (23) des surfaces d'appui (24) et des crochets d'encliquetage (25) pour la plaque à circuits imprimés (21).
